# EUROPEAN PATENT APPLICATION

(11) **EP 4 460 089 A1**
(43) Date of publication of application: **06.11.2024**
(21) Application number: 21970030.9
(22) Date of filing: 28.12.2021
(51) Int. Cl.: H04W 36/16

(54) **TERMINAL, BASE STATION, RADIO COMMUNICATION SYSTEM, AND RADIO COMMUNICATION METHOD**

(71) Applicant: NTT DOCOMO, INC., Tokyo 100-6150 (JP)
(72) Inventor: WATANABE Souki, Tokyo 100-6150 (JP); MIN Tianyang, Tokyo 100-6150 (JP)
(74) Representative: Hoffmann Eitle
(86) International application number: PCT/JP2021/048967
(87) International publication number: WO 2023/127150

(57) **Abstract**

Provided is a terminal including: a receiving unit that receives configuration information on conditional reconfiguration; and a control unit that performs a procedure for the conditional reconfiguration, in which the control unit performs specific control for retaining the configuration information after an end of the procedure for the conditional reconfiguration when a specific condition is satisfied.

## Description

### TECHNICAL FIELD

The present disclosure relates to a terminal, base station, radio communication system, and radio communication method supporting a multicast/broadcast service.

### BACKGROUND ART

The 3rd Generation Partnership Project (3GPP) has prepared a specification for the 5th generation mobile communication system (also referred to as 5G, New Radio (NR), or Next Generation (NG)), and further a specification for a next-generation system referred to as Beyond 5G, 5G Evolution, or 6G is also being prepared.

In 3GPP Release 16, conditional reconfiguration has been introduced which is for performing a connection to a target cell without transmitting a reestablishment request message to the target cell. The conditional reconfiguration may include Conditional Handover (CHO), Conditional PSCell (Primary Secondary Cell) Change (CPC), and Conditional PSCell Addition (CPA).

Incidentally, in CPC, CPC configuration is released in response to the end of CPC (end of connection to target cell). However, assuming a case where a terminal (hereinafter referred to as UE; User Equipment) repeatedly moves between two or more cells, there is a possibility that the configuration of CPC configuration and the release of CPC configuration are repeated.

From this point of view, in 3GPP Release 16, support is discussed which is for a function (hereinafter referred to as Selective activation) for retaining information on CPC (for example, UE context on network side and CPC configuration on UE side) in a network and UE (for example, Non-Patent Literature 1).

### CITATION LIST

### NON-PATENT LITERATURE

Non-Patent Literature 1: "New WID on Further NR mobility enhancements", RP213564, 3GPP TSG RAN Meeting #94e, 3GPP, December 2021

### SUMMARY OF THE INVENTION

Under this kind of background, as a result of intensive investigation, the inventors have found the necessity to define how Selective activation should be performed, such as trigger of Selective activation.

Therefore, the present invention has been made to solve the problem described above, and an object of the present invention is to provide a terminal, base station, radio communication system, and radio communication method capable of appropriately performing Selective activation.

An aspect of the present disclosure provides a terminal including: a receiving unit that receives configuration information on conditional reconfiguration; and a control unit that performs a procedure for the conditional reconfiguration, in which the control unit performs specific control for retaining the configuration information after an end of the procedure for the conditional reconfiguration when a specific condition is satisfied.

An aspect of the disclosure provides a base station including: a transmitting unit that transmits configuration information on conditional reconfiguration; and a control unit that performs a procedure for the conditional reconfiguration, in which the control unit assumes that a terminal performs specific control for retaining the configuration information after an end of the procedure for the conditional reconfiguration when a specific condition is satisfied.

An aspect of the disclosure provides a radio communication system including a terminal and a base station, in which the terminal includes: a receiving unit that receives configuration information on conditional reconfiguration; and a control unit that performs a procedure for the conditional reconfiguration, and the control unit performs specific control for retaining the configuration information after an end of the procedure for the conditional reconfiguration when a specific condition is satisfied.

An aspect of the disclosure provides a radio communication method including: a step of receiving configuration information on conditional reconfiguration; a step of performing a procedure for the conditional reconfiguration; and a step of performing specific control for retaining the configuration information after an end of the procedure for the conditional reconfiguration when a specific condition is satisfied.

### BRIEF DESCRIPTION OF THE DRAWINGS

[FIG. 1] Fig. 1 is an overall schematic configuration diagram of a radio communication system 10.
[FIG. 2] Fig. 2 is a diagram showing a frequency range used in the radio communication system 10.
[FIG. 3] Fig. 3 is a diagram showing configuration examples of radio frames, subframes, and slots used in the radio communication system 10.
[FIG. 4] Fig. 4 is a functional block diagram of a UE 200.
[FIG. 5] Fig. 5 is a functional block diagram of a gNB 100.
[FIG. 6] Fig. 6 is a diagram for explaining Operation Example 1.
[FIG. 7] Fig. 7 is a diagram for explaining Operation Example 2.
[FIG. 8] Fig. 8 is a diagram for explaining Operation Example 3.
[FIG. 9] Fig. 9 is a diagram for explaining Operation Example 4.
[FIG.10] Fig. 10 is a diagram for explaining Operation Example 5.
[FIG.11] Fig. 11 is a diagram for explaining Operation Example 6.
[FIG.12] Fig. 12 is a diagram for explaining Operation Example 7.
[FIG.13] Fig. 13 is a diagram for explaining an Operation Example 8.
[FIG.14] Fig. 14 is a diagram showing an example of UE Assistance Information (ASN.1 format).
[FIG.15] Fig. 15 is a diagram showing an example of a CondReconfigToAddModList (ASN.1 format).
[FIG.16] Fig. 16 is a diagram showing an example of an SN Addition request (ASN.1 format).
[FIG.17] Fig. 17 is a diagram showing an example of an HO request (ASN.1 format).
[FIG.18] Fig. 18 is a diagram showing an example of a hardware configuration of the gNB 100 and UE 200.
[FIG.19] Fig. 19 is a diagram showing a configuration example of a vehicle 2001.

### DESCRIPTION OF EMBODIMENTS

Embodiments will be explained below with reference to the accompanying drawings. Note that the same or similar reference numerals have been attached to the same functions and configurations, and the description thereof will be omitted as appropriate.

### [Embodiment]

### (1) Overall schematic configuration of radio communication system

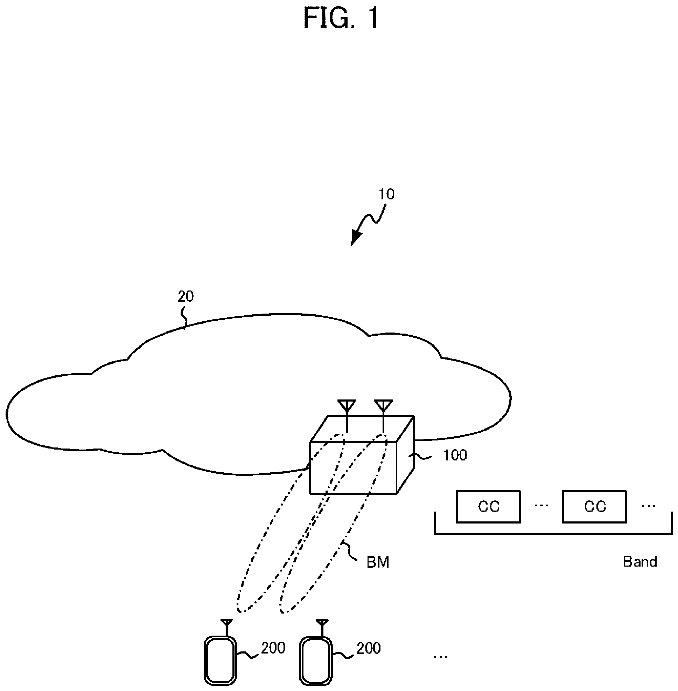

Fig. 1 is an overall schematic configuration diagram of a radio communication system 10 according to an embodiment. The radio communication system 10 is compliant with 5G New Radio (NR) and includes a Next Generation-Radio Access Network 20 (hereinafter referred to as NG-RAN 20) and a terminal 200 (hereinafter referred to as User Equipment (UE) 200).

The radio communication system 10 may be compliant with a method referred to as Beyond 5G, 5G Evolution, or 6G.

The NG-RAN 20 includes a base station 100 (hereinafter referred to as gNB 100). A specific configuration of the radio communication system 10 including the number of gNBs 100 and UEs 200 is not limited to the example shown in Fig. 1.

The NG-RAN 20 actually includes a plurality of NG-RAN Nodes, specifically, gNBs (or ng-eNBs), and is connected to a 5G-compliant core network (hereinafter referred to as 5GC, not shown). The NG-RAN 20 and 5GC may simply be expressed as a "network".

The gNB 100 is a radio base station that is compliant with 5G and performs radio communication according to 5G with the UE 200. The gNB 100 and UE 200 can support Massive Multiple-Input Multiple-Output (MIMO) generating a beam BM with higher directivity by controlling radio signals transmitted from a plurality of antenna elements; Carrier Aggregation (CA) bundling and using a plurality of Component Carriers (CCs), and Dual Connectivity (DC) simultaneously communicating to two or more transport blocks between the UE and each of the two NG-RAN Nodes.

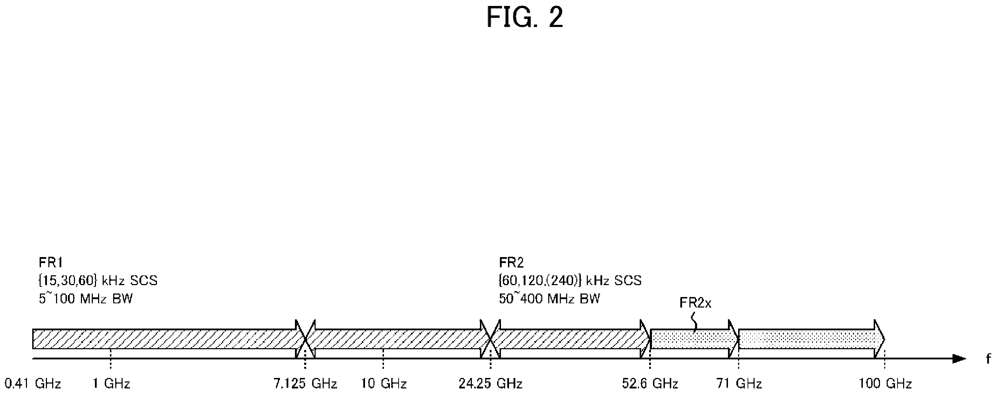

Further, the radio communication system 10 supports a plurality of frequency ranges (FRs). Fig. 2 shows frequency ranges used in the radio communication system 10.

As shown in Fig. 2, the radio communication system 10 supports an FR 1 and an FR 2. Frequency bands of each FR are as follows.

- FR 1: 410 MHz to 7.125 GHz
- FR 2: 24.25 GHz to 52.6 GHz

In the FR 1, Sub-Carrier Spacing (SCS) of 15, 30, or 60 kHz is used, and a bandwidth (BW) of 5 to 100 MHz may be used. The FR 2 is higher than the FR 1, an SCS of 60 or 120 kHz (240 kHz may be included) is used, and a bandwidth (BW) of 50 to 400 MHz may be used.

The SCS may be interpreted as numerology. The numerology is defined in 3GPP TS38.300 and corresponds to one subcarrier interval in a frequency domain.

In addition, the radio communication system 10 supports a higher frequency band than the frequency band of the FR 2. Specifically, the radio communication system 10 supports a frequency band of more than 52.6 GHz and 71 GHz or less or 114.25 GHz or less. This kind of high frequency band may be referred to as "FR 2x", for convenience.

In order to solve a problem that an influence of phase noise increases in a high frequency band, when a band of more than 52.6 GHz is used, Cyclic Prefix-Orthogonal Frequency Division Multiplexing (CP-OFDM)/Discrete Fourier Transform - Spread (DFT-S-OFDM) with larger Sub-Carrier Spacing (SCS) may be applied.

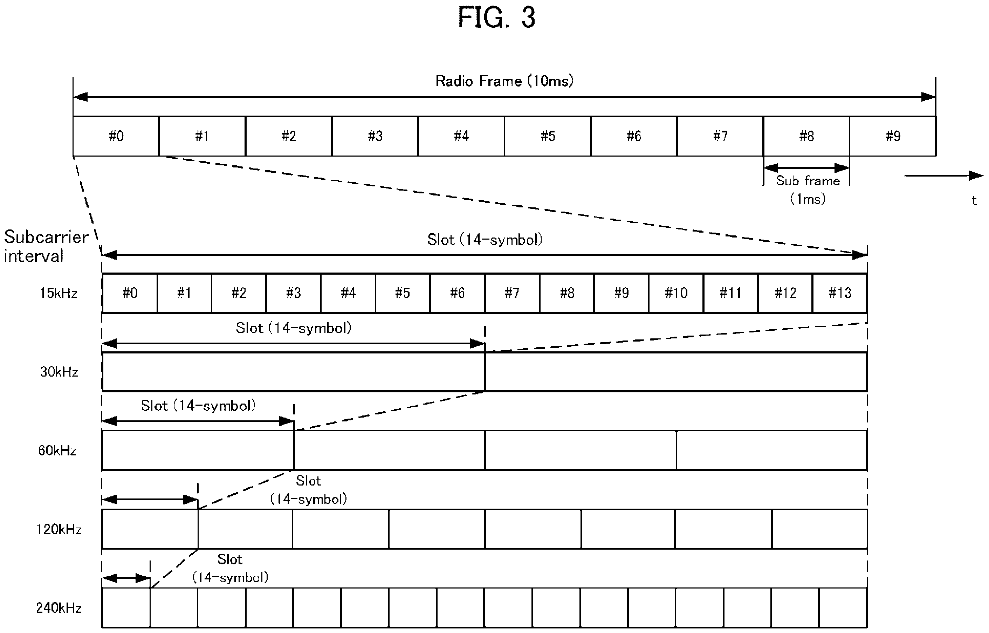

Fig. 3 shows a configuration example of radio frames, subframes, and slots used in the radio communication system 10.

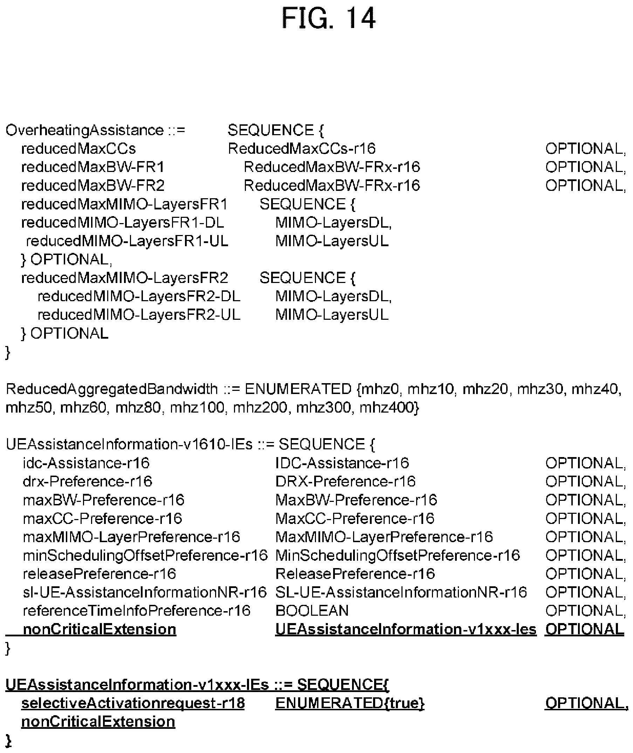

As shown in Fig. 3, 14 symbols constitute one slot, and the larger (wider) the SCS, the shorter the symbol period (and the slot period). The SCS is not limited to an interval (frequency) shown in Fig. 3. For example, 480 kHz, 960 kHz, and the like may be used.

Further, the number of symbols constituting one slot does not necessarily have to be 14 (for example, 28, 56 symbols). In addition, the number of slots per subframe may vary depending on the SCS.

Note that a time direction (t) shown in Fig. 3 may be referred to as a time domain, symbol period, or symbol time. Further, a frequency direction may be referred to as a frequency domain, resource block, subcarrier, Bandwidth part (BWP), or the like.

A DMRS is a type of reference signal and is prepared for various channels. In this case, unless otherwise specified, the DMRS may mean a DMRS for a downlink data channel, specifically, a DMRS for a Physical Downlink Shared channel (PDSCH). However, a DMRS for an uplink data channel, specifically a DMRS for a Physical Uplink Shared channel (PUSCH) may be interpreted in the same way as the DMRS for a PDSCH.

The DMRS may be used for channel estimation in the UE 200 as part of a device, for example, coherent demodulation. The DMRS may be present only in a resource block (RB) used for PDSCH transmission.

The DMRS may have a plurality of mapping types. Specifically, the DMRS has mapping type A and mapping type B. In the mapping type A, the first DMRS is allocated to a second or third symbol in a slot. In the mapping type A, the DMRS may be mapped based on a slot boundary regardless of where in the slot actual data transmission is initiated. The reason why the first DMRS is allocated to the second or third symbol in the slot may be interpreted as allocating the first DMRS after control resource sets (CORESET).

In the mapping type B, the first DMRS may be placed on a first symbol of data allocation. That is, a location of the DMRS may be given relative to where data is located, rather than relative to a slot boundary.

Further, the DMRS may have a plurality of Types. Specifically, the DMRS has Type 1 and Type 2. Type 1 and Type 2 differ in mapping and the maximum number of orthogonal reference signals in a frequency domain. In Type 1, it is possible to output a maximum of four orthogonal signals with a single-symbol DMRS, and in Type 2, it is possible to output a maximum of eight orthogonal signals with a double-symbol DMRS.

The DC described above may include any one of E-UTRA-NR Dual Connectivity (EN-DC), NR-EUTRA Dual Connectivity (NE-DC), and NR-NR Dual Connectivity (NR-DC).

In the CA or DC described above, a group of cells capable of performing processing on a C-plane (control plane) and U-plane (user plane) may be referred to as a Master Cell Group (MCG). In the DC described above, a group of cells capable of performing processing on a U-plane (user plane) may be referred to as a Secondary Cell Group (SCG). A cell included in the MCG may include a Primary Cell (hereinafter referred to as PCell). A node with the cell included in the MCG may be referred to as a Master Node (MN). A cell included in the SCG may be referred to as a Secondary Cell (hereinafter referred to as PCell). A SCell may include a Primary Secondary Cell (hereinafter referred to as PSCell). A node with the cell included in the SCG may be referred to as a Secondary Node (SN).

### (2) Functional block configuration of radio communication system

Next, a functional block configuration of the radio communication system 10 will be described.

First, a functional block configuration of the UE 200 will be described.

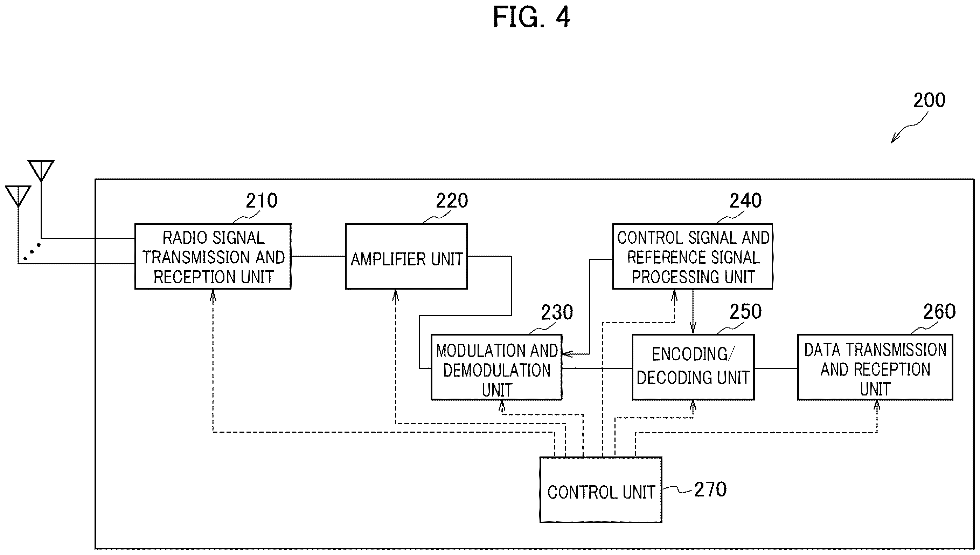

Fig. 4 is a functional block diagram of the UE 200. As shown in Fig. 4, the UE 200 includes a radio signal transmission and reception unit 210, an amplifier unit 220, a modulation and demodulation unit 230, a control signal and reference signal processing unit 240, an encoding/decoding unit 250, a data transmission and reception unit 260, and a control unit 270.

The radio signal transmission and reception unit 210 transmits and receives NR-compliant radio signals. The radio signal transmission and reception unit 210 supports Massive MIMO, CA bundling and using a plurality of CCs, and DC communicating simultaneously between the UE and each of the two NG-RAN Nodes.

The amplifier unit 220 is constituted by a Power Amplifier (PA)/a Low Noise Amplifier (LNA), or the like. The amplifier unit 220 amplifies a signal output from the modulation and demodulation unit 230 to have a predetermined power level. Further, the amplifier unit 220 amplifies an RF signal output from the radio signal transmission and reception unit 210.

The modulation and demodulation unit 230 performs data modulation/demodulation, transmission power configuration, resource block allocation, and the like for each predetermined communication destination (gNB 100 or another gNB). In the modulation and demodulation unit 230, Cyclic Prefix-Orthogonal Frequency Division Multiplexing (CP-OFDM)/Discrete Fourier Transform - Spread (DFT-S-OFDM) may be applied. Further, DFT-S-OFDM may be used not only for an uplink (UL) but also for a downlink (DL).

The control signal and reference signal processing unit 240 performs processing for various control signals transmitted and received by the UE 200, and processing for various reference signals transmitted and received by the UE 200.

Specifically, the control signal and reference signal processing unit 240 receives various control signals transmitted from the gNB 100 via a predetermined control channel, for example, control signals of a radio resource control layer (RRC). Further, the control signal and reference signal processing unit 240 transmits various control signals to the gNB 100 via the predetermined control channel.

The control signal and reference signal processing unit 240 performs processing using Reference Signals (RSs) such as a Demodulation Reference Signal (DMRS), a Phase Tracking Reference Signal (PTRS), and the like.

The DMRS is a terminal-specific reference signal (pilot signal) known between a base station and a terminal for estimating a fading channel used for data demodulation. The PTRS is a terminal-specific reference signal for the purpose of estimating phase noise, which becomes a problem in a high frequency band.

In addition to a DMRS and PTRS, the reference signal may include a Channel State Information-Reference Signal (CSI-RS), a Sounding Reference Signal (SRS), and a Positioning Reference Signal (PRS) for position information.

Further, the channel includes a control channel and a data channel. The control channel includes a Physical Downlink Control Channel (PDCCH), a Physical Uplink Control Channel (PUCCH), a Random Access Channel (RACH), Downlink Control Information (DCI) including a Random Access Radio Network Temporary Identifier (RA-RNTI), and a Physical Broadcast Channel (PBCH).

Further, the data channel includes a Physical Downlink Shared channel (PDSCH), a Physical Uplink Shared Channel (PUSCH), and the like. The data means data transmitted via a data channel. The data channel may be read as a shared channel.

The control signal and reference signal processing unit 240 may receive downlink control information (DCI). The DCI includes, as existing fields, fields for storing DCI Formats, a Carrier indicator (CI), BWP indicator, Frequency Domain Resource Assignment (FDRA), Time Domain Resource Assignment (TDRA), Modulation and Coding Scheme (MCS), HARQ Process Number (HPN), New Data Indicator (NDI), Redundancy Version (RV), and the like.

A value stored in a DCI Format field is an information element for specifying a format of the DCI. A value stored in a CI field is an information element for specifying a CC to which the DCI is applied. A value stored in a BWP indicator field is an information element for specifying a BWP to which the DCI is applied. The BWP that can be specified using the BWP indicator is configured by an information element included in an RRC message (BandwidthPart-Config). A value stored in the FDRA field is an information element for specifying a frequency domain resource to which the DCI is applied. The frequency domain resource is identified by using the value stored in the FDRA field and the information element included in the RRC message (RA Type). A value stored in a TDRA field is an information element for specifying a time domain resource to which the DCI is applied. The time domain resource is identified by using the value stored in the TDRA field and the information element included in the RRC message (pdsch-TimeDomainAllocationList, pusch-TimeDomainAllocationList). The time domain resource may be identified by using the value stored in the TDRA field and a default table. A value stored in the MCS field is an information element for specifying an MCS to which the DCI is applied. The MCS is identified by using the value stored in the MCS and an MCS table. The MCS table may be specified by using the RRC message or identified by using RNTI scrambling. A value stored in an HPN field is an information element for specifying an HARQ Process to which the DCI is applied. A value stored in the NDI is an information element for identifying whether the data to which the DCI is applied is initial transmission data. A value stored in an RV field is an information element for specifying redundancy of data to which the DCI is applied.

In the embodiment, the control signal and reference signal processing unit 240 constitutes a receiving unit that receives configuration information on conditional reconfiguration. The conditional reconfiguration may include Conditional Handover (CHO), Conditional PSCell (Primary Secondary Cell) Change (CPC), and Conditional PSCell Addition (CPA). The configuration information may be referred to as ConditionalReconfiguration. The ConditionalReconfiguration may include a Special Cell (hereinafter referred to as SpCell) configuration. The SpCell may include a PCell or PSCell. That is, the SpCell configuration is configuration information on a candidate of a target cell in conditional reconfiguration (CHO, CPC, or CPA). The ConditionalReconfiguration may be included in RRC Reconfiguration.

The encoding/decoding unit 250 performs data division/connection, channel coding/decoding, and the like for each predetermined communication destination (gNB 100 or another gNB).

Specifically, the encoding/decoding unit 250 divides data output from the data transmission and reception unit 260 into predetermined sizes, and performs channel coding on the divided data. Further, the encoding/decoding unit 250 decodes data output from the modulation and demodulation unit 230 and connects the decoded data.

The data transmission and reception unit 260 transmits and receives a Protocol Data Unit (PDU) and a Service Data Unit (SDU). Specifically, the data transmission and reception unit 260 performs assembly/disassembly and the like of PDUs/SDUs in a plurality of layers (medium access control layer (MAC), radio link control layer (RLC), and packet data convergence protocol layer (PDCP), and the like). Further, the data transmission and reception unit 260 performs data error correction and re-transmission control based on a Hybrid Automatic Repeat Request (HARQ).

The control unit 270 controls each functional block that configures the UE 200. In the embodiment, the control unit 270 constitutes a control unit that performs a procedure for conditional reconfiguration. If a specific condition is satisfied, the control unit 270 performs a specific control (hereinafter referred to as Selective activation) for retaining configuration information (hereinafter referred to as SpCell configuration) after the end of the procedure for conditional reconfiguration.

The specific condition may include a condition (hereinafter referred to as first condition) for receiving an indication indicating Selective Activation from a network. The indication may be included in RRC Reconfiguration for conditional reconfiguration. The specific condition may include a condition (hereinafter referred to as second condition) for transmitting, to a network, a message requesting Selective activation. The message may be UE Assistance Information. The specific condition may include both the first and second conditions.

Whether to perform Selective activation may be determined based on a mobility pattern of the UE 200. The control unit 270 may determine whether to perform Selective activation based on an information element (VisitedCellInfoList) specified in 3GPP TS38.331, for example. The VisitedCellInfoList may have a maximum of 16 cells as cells in which the UE 200 most recently stayed. The control unit 270 may determine to perform Selective activation if a pattern of Cell IDs included in the VisitedCellInfoList is a pattern in which the same Cell ID appears repeatedly (for example, "Cell #1", "Cell #2", "Cell #1", "Cell #2", and so forth).

Second, a functional block configuration of the gNB 100 will be described.

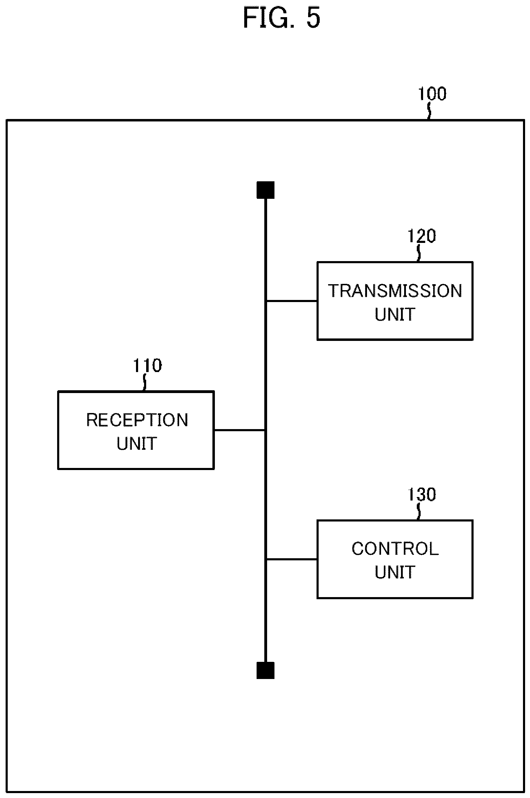

Fig. 5 is a functional block diagram of the gNB 100. As shown in Fig. 5, the gNB 100 includes a reception unit 110, a transmission unit 120, and a control unit 130.

The reception unit 110 receives various signals from the UE 200. The reception unit 110 may receive a UL signal via the PUCCH or PUSCH.

The transmission unit 120 transmits various signals to the UE 200. The transmission unit 120 may transmit a DL signal via the PDCCH or PDSCH. In the embodiment, the transmission unit 120 constitutes a transmitting unit that transmits configuration information on conditional reconfiguration.

The control unit 130 controls the gNB 100. In the embodiment, the control unit 130 constitutes a control unit that performs a procedure for conditional reconfiguration. The control unit 130 assumes that the UE performs Selective activation when a specific condition is satisfied.

The specific condition may include a condition (first condition) for transmitting, to the UE 200, an indication indicating Selective activation. The indication may be included in RRC Reconfiguration for conditional reconfiguration. The specific condition may include a condition (second condition) for receiving, from the UE 200, a message requesting Selective activation. The message may be UE Assistance Information. The specific condition may include both the first and second conditions.

Whether to perform Selective activation may be determined based on a mobility pattern of the UE 200. The control unit 130 may determine whether to perform Selective activation based on an information element (UE History Information) specified in 3GPP TS38.423, for example. A Last Visited Cell List included in the UE History Information may include a maximum of 16 cells as cells in which the UE 200 most recently stayed. The control unit 270 may determine to perform Selective activation if a pattern of Cell IDs included in the Last Visited Cell List is a pattern in which the same Cell ID appears repeatedly (for example, "Cell #1", "Cell #2", "Cell #1", "Cell #2", and so forth). Alternatively, the control unit 130 may determine whether to perform Selective activation based on a UE trajectory. The UE trajectory may include location information (latitude, longitude, and altitude), timeStamp, and velocity (horizontal velocity, vertical velocity) of the UE. The control unit 130 may specify a route of the UE 200 based on the UE trajectory, and determine to perform Selective activation when the route of the UE 200 repeats a certain path.

If the control unit 130 determines to perform Selective activation, the control unit 130 may retain a UE context after the end of the procedure for conditional reconfiguration, even if the UE 200 is not connected to its own cell in conditional reconfiguration. In such a case, the control unit 130 may retain one or more information elements selected from UE Config, SCG Config, and CPC config, in addition to the UE context.

### (3) Issue

In conditional reconfiguration, the SpCell configuration is released in response to the end of the conditional reconfiguration (that is, end of connection to target cell). However, assuming a case where the UE 200 repeatedly moves between two or more cells, there is a possibility that configuration of the SpCell configuration and release of the SpCell configuration are repeated.

From this point of view, support is discussed which is for a function (hereinafter referred to as Selective activation) for retaining information on conditional reconfiguration (for example, UE context on network side and SpCell configuration on UE side) in the network and UE.

Under this kind of background, as a result of intensive investigation, the inventors have found the necessity to define how Selective activation should be performed, such as trigger of Selective activation.

### (4) Operation examples

Next, operation examples of the embodiment will be described. In the operation examples, a procedure for preforming Selective activation will be described.

### (4.1) Operation Example 1

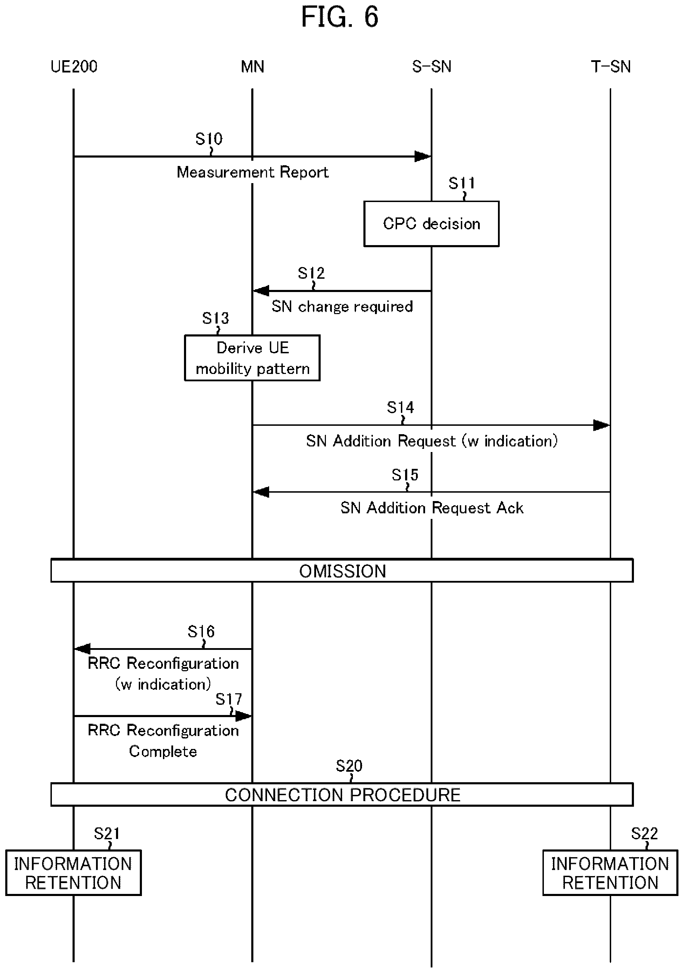

In Operation Example 1, CPC from a Source SN (hereinafter referred to as S-SN) to a Target SN (T-SN) will be described. In Operation Example 1, a case will be described in which determination as to whether to perform CPC (CPC decision) is made by the S-SN, and derivation of the mobility pattern of the UE 200 is performed by the MN. The T-SN shown in Fig. 6 may be considered as a candidate of the T-SN.

As shown in Fig. 6, in step S10, the UE 200 transmits a Measurement Report to the S-SN. The Measurement Report includes the quality of the S-SN and the quality of a cell in the periphery of the S-SN.

In step S11, the S-SN determines whether to perform CPC, based on the Measurement Report. A case in which the S-SN determines to perform CPC will be continuously described.

In step S12, the S-SN transmits, to the MN, a message (SN change required) for requesting CPC. The SN change required includes information on a candidate of the T-SN (for example, CellID or the like).

In step S13, the MN derives the mobility pattern of the UE 200. The mobility pattern of the UE 200 is derived based on the UE History Information or UE trajectory. The MN determines whether to perform Selective activation, based on the mobility pattern of the UE 200. A case in which the MN determines to perform Selective activation will be continuously described.

In step S14, the MN transmits, to candidates of one or more T-SNs, messages (SN Addition Request) requesting that they be prepared to be added as PSCells. The SN Addition Request may include an indication indicating Selective activation.

In step S15, the candidates of one or more T-SNs transmit, to the MN, response messages (SN Addition Request ACK) to the SN Addition Request.

In step S16, the MN transmits, to the UE 200, a message (RRC Reconfiguration) indicating CPC. The RRC Reconfiguration includes configuration information (SpCell configuration) on the T-SN candidate. The RRC Reconfiguration includes an indication indicating Selective activation.

In step S17, the UE 200 transmits, to the MN, a response message (RRC Reconfiguration Complete) to the RRC Reconfiguration.

In step S20, the UE 200 performs a connection procedure for a T-SN selected from the T-SN candidates. Specifically, the UE 200 performs a Random Access (RA) procedure for the selected T-SN.

In step S21, the UE 200 retains configuration information (for example, SpCell configuration or CPC configuration) on CPC after the end of a procedure for CPC (in other words, after end of connection to T-SN). The SpCell configuration may be referred to as PSCell Config. The SpCell configuration includes configuration information on a T-SN candidate to which the UE 200 did not connect in the procedure for CPC.

In step S22, the T-SN candidate may retain the UE context after the end of the procedure for CPC (in other words, after end of connection to T-SN). In such a case, the T-SN candidate may retain one or more information elements selected from UE Config, SCG Config, and CPC config, in addition to the UE context. The T-SN candidate may be considered to be the T-SN candidate to which the UE 200 did not connect in the procedure for CPC.

In Operation Example 1, the specific condition may be considered to be the first condition for receiving the indication indicating Selective activation in step S16.

### (4.2) Operation Example 2

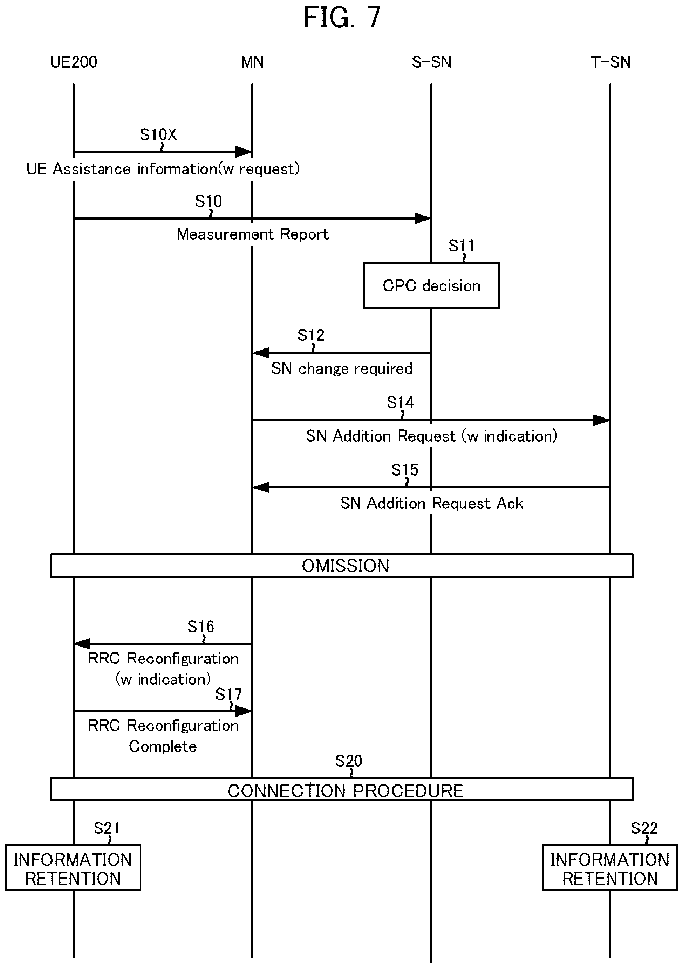

In Operation Example 2, CPC from an S-SN to a T-SN will be described. In Operation Example 2, a case will be described in which determination as to whether to perform CPC (CPC decision) is made by the S-SN and derivation of the mobility pattern of the UE 200 is performed by the UE 200. The T-SN shown in Fig. 7 may be considered as a candidate of the T-SN.

In the following, the same step numbers are used for the same processing as in Operation Example 1. Accordingly, the differences between Operation Example 2 and Operation Example 1 will be mainly described. Specifically, step S10X is performed instead of step S13 described above.

As shown in Fig. 7, in step S10X, the UE 200 derives the mobility pattern of the UE 200. The mobility pattern of the UE 200 is derived based on the VisitedCellInfoList. The UE 200 determines whether to perform Selective activation, based on the mobility pattern of the UE 200. A case in which the UE 200 determines to perform Selective activation will be continuously described. The UE 200 transmits, to the MN, a message (UE Assistance Information) requesting Selective activation. The UE Assistance Information includes an information element on the mobility pattern of the UE 200.

In Operation Example 2, the determination as to whether to perform Selective activation may be made by the MN, based on the UE Assistance Information received from the UE 200.

In Operation Example 2, the specific condition may include the second condition for transmitting the message requesting Selective activation. The specific condition may be considered to include the first condition for receiving the indication indicating Selective activation in step S16.

### (4.3) Operation Example 3

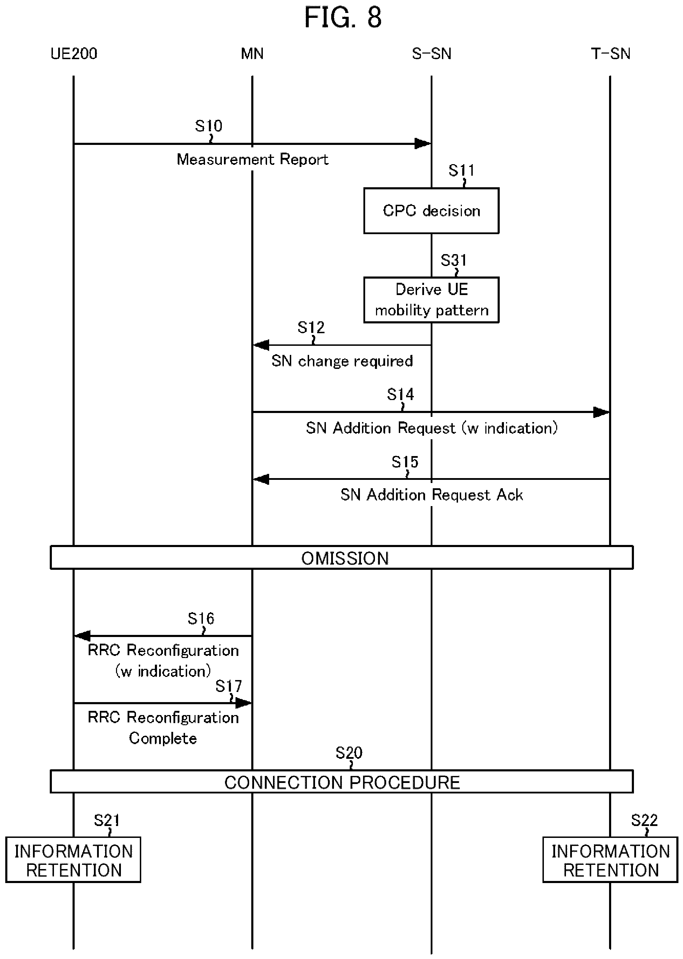

In Operation Example 3, CPC from an S-SN to a T-SN will be described. In Operation Example 3, a case will be described in which determination as to whether to perform CPC (CPC decision) is made by the S-SN, and derivation of the mobility pattern of the UE 200 is performed by the S-SN. The T-SN shown in Fig. 8 may be considered as a candidate of the T-SN.

In the following, the same step numbers are used for the same processing as in Operation Example 1. Accordingly, the differences between Operation Example 3 and Operation Example 1 will be mainly described. Specifically, step S31 is performed instead of step S13 described above.

As shown in Fig. 8, in step S31, the S-SN derives the mobility pattern of the UE 200. The mobility pattern of the UE 200 is derived based on the UE History Information or UE trajectory. The S-SN determines whether to perform Selective activation based on the mobility pattern of the UE 200. A case in which the S-SN determines to perform Selective activation will be continuously described.

In Operation Example 3, in step S12, the S-SN may transmit, to the MN, SN change required including an indication indicating Selective activation.

In Operation Example 3, the specific condition may be considered to be the first condition for receiving the indication indicating Selective activation in step S16.

### (4.4) Operation Example 4

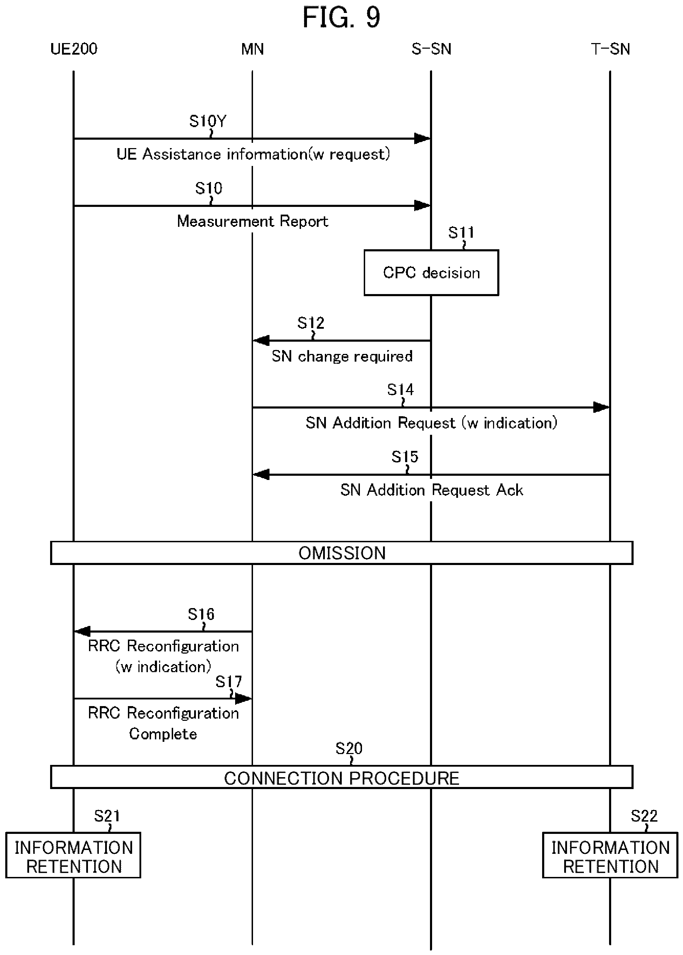

In Operation Example 4, CPC from an S-SN to a T-SN will be described. In Operation Example 4, a case will be described in which determination as to whether to perform CPC (CPC decision) is made by the S-SN, and derivation of the mobility pattern of the UE 200 is performed by the UE 200. The T-SN shown in Fig. 9 may be considered as a candidate of the T-SN.

In the following, the same step numbers are used for the same processing as in the Operation Example 3. Accordingly, the difference between Operation Example 4 and Operation Example 3 will be mainly described. Specifically, step S10Y is performed instead of step S31 described above.

As shown in Fig. 9, in step S10Y, the UE 200 derives the mobility pattern of the UE 200. The mobility pattern of the UE 200 is derived based on the VisitedCellInfoList. The UE 200 determines whether to perform Selective activation, based on the mobility pattern of the UE 200. A case in which the UE 200 determines to perform Selective activation will be continuously described. The UE 200 transmits, to the S-SN, a message (UE Assistance Information) requesting Selective activation. The UE Assistance Information includes an information element on the mobility pattern of the UE 200.

In Operation Example 4, determination as to whether to perform Selective activation may be made by the S-SN, based on the UE Assistance Information received from the UE 200.

In Operation Example 4, the specific condition may include the second condition for transmitting the message requesting Selective activation. The specific condition may be considered to include the first condition for receiving the indication indicating Selective activation in step S16.

### (4.5) Operation Example 5

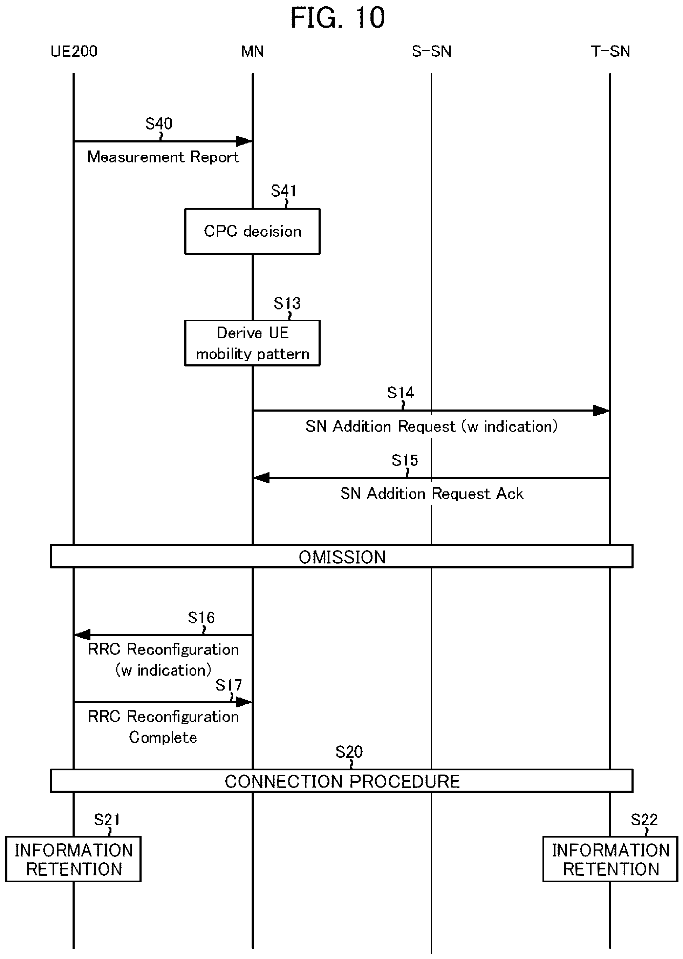

In Operation Example 5, CPC from an S-SN to a T-SN will be described. In Operation Example 5, a case will be described in which determination as to whether to perform CPC (CPC decision) is made by the MN, and derivation of the mobility pattern of the UE 200 is performed by the MN. The T-SN shown in Fig. 10 may be considered as a candidate of the T-SN.

In the following, the same step numbers are used for the same processing as in Operation Example 1. Accordingly, the difference between Operation Example 5 and Operation Example 1 will be mainly described. Specifically, steps S40 and S41 are performed instead of steps S10 to S12 described above.

As shown in Fig. 10, in step S40, the UE 200 transmits a Measurement Report to the MN. The Measurement Report includes the quality of the S-SN and the quality of a cell in the periphery of the S-SN.

In step S41, the MN determines whether to perform CPC based on the Measurement Report. A case in which the MN determines to perform CPC will be continuously described.

In Operation Example 5, the specific condition may be considered to be the first condition for receiving the indication indicating Selective activation in step S16

### (4.6) Operation Example 6

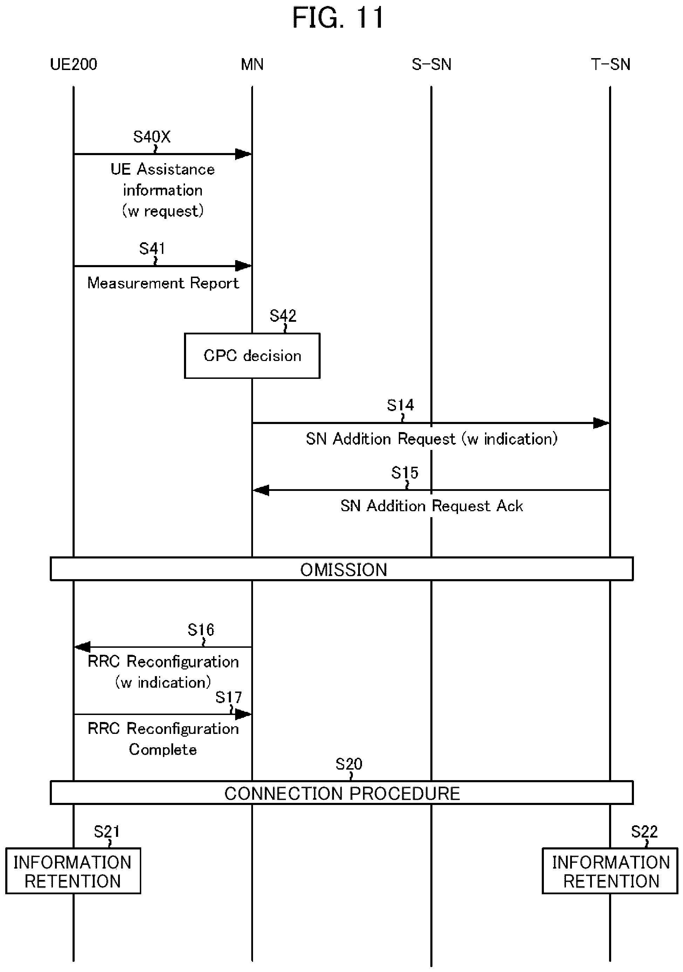

In Operation Example 6, CPC from an S-SN to a T-SN will be described. In Operation Example 6, a case will be described in which determination as to whether to perform CPC (CPC decision) is made by the MN, and derivation of the mobility pattern of the UE 200 is performed by the UE 200. The T-SN shown in Fig. 11 may be considered as a candidate of the T-SN.

In the following, the same step numbers are used for the same processing as in Operation Example 5. Accordingly, the difference between Operation Example 6 and Operation Example 5 will be mainly described. Specifically, step S40X is performed instead of step S13 described above.

As shown in Fig. 11, in step S40X, the UE 200 derives the mobility pattern of the UE 200. The mobility pattern of the UE 200 is derived based on the VisitedCellInfoList. The UE 200 determines whether to perform Selective activation, based on the mobility pattern of the UE 200. A case in which the UE 200 determines to perform Selective activation will be continuously described. The UE 200 transmits, to the MN, a message (UE Assistance Information) requesting Selective activation. The UE Assistance Information includes an information element on the mobility pattern of the UE 200.

In Operation Example 6, determination as to whether to perform Selective activation may be made by the MN, based on the UE Assistance Information received from the UE 200.

In Operation Example 6, the specific condition may include the second condition for transmitting the message requesting Selective activation. The specific condition may be considered to include the first condition for receiving the indication indicating Selective activation in step S16.

### (4.7) Operation Example 7

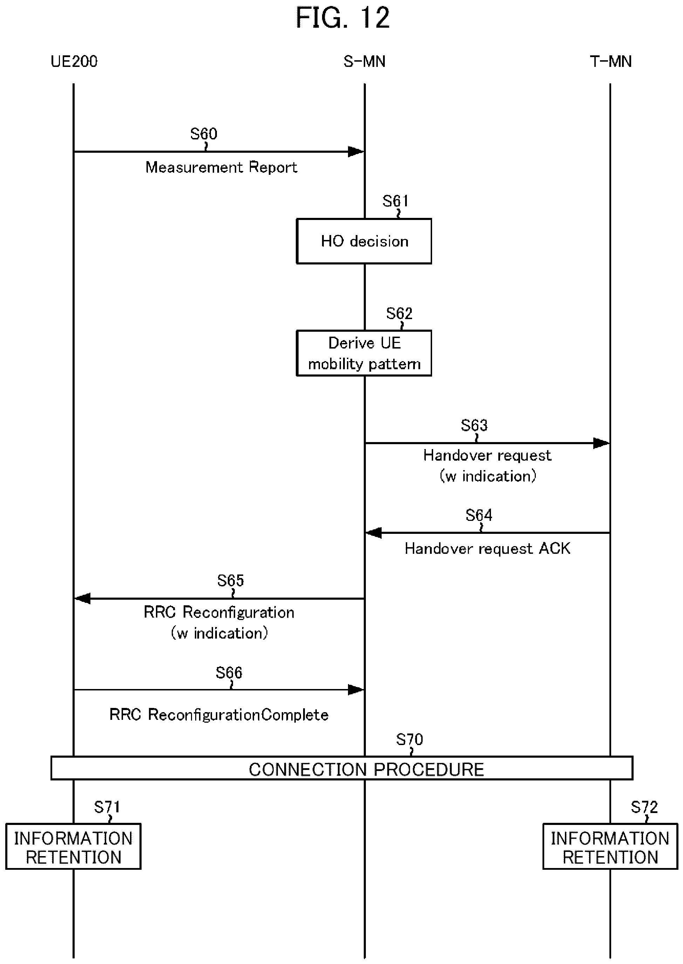

In Operation Example 7, CHO from a Source MN (hereinafter referred to as S-MN) to a Target MN (T-MN) will be described. In Operation Example 7, a case will be described in which determination as to whether to perform CHO (HO decision) is made by the S-MN, and derivation of the mobility pattern of the UE 200 is performed by the MN. The T-MN shown in Fig. 12 may be considered as a candidate of the T-MN.

As shown in Fig. 12, in step S60, the UE 200 transmits the Measurement Report to the S-MN. The Measurement Report includes the quality of the S-MN and the quality of a cell in the periphery of the S-MN.

In step S61, the S-MN determines whether to perform CHO based on the Measurement Report. A case in which the S-MN determines to perform CHO will be continuously described.

In step S62, the MN derives the mobility pattern of the UE 200. The mobility pattern of the UE 200 is derived based on the UE History Information or UE trajectory. The MN determines whether to perform Selective activation, based on the mobility pattern of the UE 200. A case in which the MN determines to perform Selective activation will be continuously described.

In step S63, the MN transmits, to candidates of one or more T-MNs, messages (Handover request) requesting that they be prepared to be added as PCells. The Handover request may include an indication indicating Selective activation.

In step S64, the candidates of one or more T-MNs transmit, to the MN, response messages (Handover request ACK) to the Handover request.

In step S65, the MN transmits, to the UE 200, a message (RRC Reconfiguration) indicating CHO. The RRC Reconfiguration includes configuration information (PCell configuration) on the T-MN candidate. The RRC Reconfiguration includes an indication indicating Selective activation.

In step S66, the UE 200 transmits, to the MN, a response message (RRC Reconfiguration Complete) to the RRC Reconfiguration.

In step S70, the UE 200 performs a connection procedure for a T-MN selected from the T-MN candidates. Specifically, the UE 200 performs a Random Access (RA) procedure for the selected T-MN.

In step S71, the UE 200 retains configuration information on CHO (for example, SpCell configuration) after the end of a procedure for CHO (in other words, after end of connection to T-MN). The SpCell configuration may be referred to as PCell Config. The SpCell configuration includes configuration information on a T-MN candidate to which the UE 200 did not connect in a procedure for CPC.

In step S72, the T-MN candidate may retain the UE context after the end of the procedure for CHO (in other words, after end of connection to T-MN). In such a case, the T-MN candidate may retain UE Config and/or MCG Config in addition to the UE context. The T-MN candidate may be considered to be the T-MN candidate to which the UE 200 did not connect in the procedure for CHO.

In Operation Example 7, the specific condition may be considered to be the first condition for receiving the indication indicating Selective activation in step S66.

### (4.8) Operation Example 8

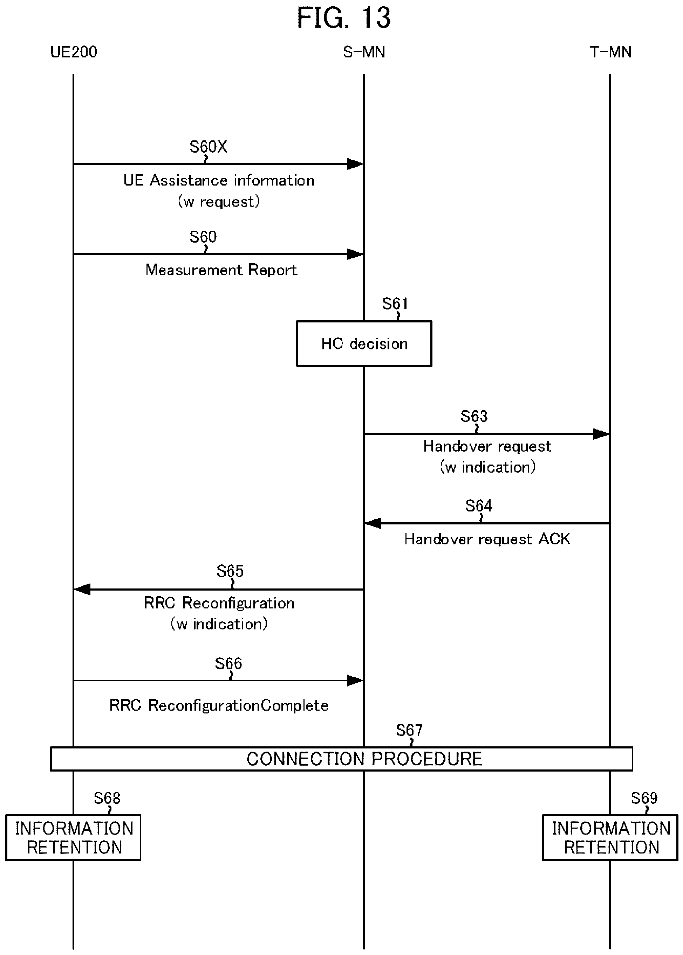

In Operation Example 8, CHO from an S-MN to a T-MN will be described. In Operation Example 8, a case will be described in which determination as to whether to perform CHO (HO decision) is made by the S-MN, and derivation of the mobility pattern of the UE 200 is performed by the UE 200. The T-MN shown in Fig. 13 may be considered as a candidate of the T-MN.

In the following, the same step numbers are used for the same processing as in Operation Example 7. Accordingly, the difference between Operation Example 8 and Operation Example 7 will be mainly described. Specifically, step S60X is performed instead of step S62 described above.

As shown in Fig. 13, in step S60X, the UE 200 derives the mobility pattern of the UE 200. The mobility pattern of the UE 200 is derived based on the VisitedCellInfoList. The UE 200 determines whether to perform Selective activation, based on the mobility pattern of the UE 200. A case in which the UE 200 determines to perform Selective activation will be continuously described. The UE 200 transmits, to the MN, a message (UE Assistance Information) requesting Selective activation. The UE Assistance Information includes an information element on the mobility pattern of the UE 200.

In Operation Example 8, determination as to whether to perform Selective activation may be made by the S-MN, based on the UE Assistance Information received from the UE 200.

In Operation Example 8, the specific condition may include the second condition for transmitting the message requesting Selective activation. The specific condition may be considered to include the first condition for receiving the indication indicating Selective activation in step S66.

### (5) Configuration example of information element

First, a description will be given regarding the UE Assistance Information used in steps S10X, S10Y, S40X, and S60X of Operation Examples 2, 4, 6, and 8. As shown in Fig. 14, the UE Assistance Information may include a selectiveActivationrequest. The selectiveActivationrequest is an example of an information element for requesting Selective activation.

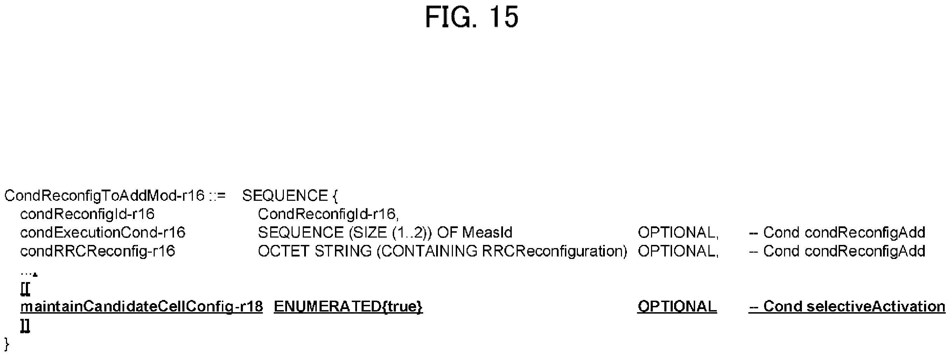

Second, a description will be given regarding a CondReconfigToAddModList included in the RRC Reconfiguration used in step S16 of Operation Examples 1 to 6 and step S65 of Operation Examples 7 and 8. As shown in Fig. 15, the CondReconfigToAddModList may include maintainCandidateCellConfig. The maintainCandidateCellConfig is an information element for indicating the retention of a SpCell configuration of a target cell, and may be considered to be an example of an information element for indicating Selective activation.

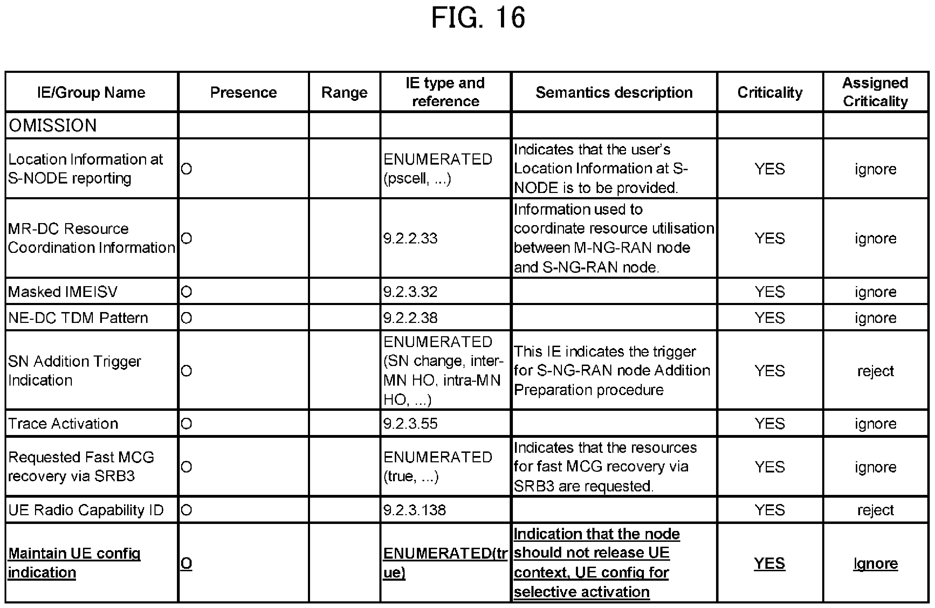

Third, the SN Addition request used in step S14 of Operation Examples 1 to 6 will be described. As shown in Fig. 16, the SN Addition request may include a Maintain UE config indication. The Maintain UE config indication is an information element for indicating the retention of configuration information such as a UE context, UE Config, SCG config, and CPC Config, and may be considered to be an example of an information element for indicating Selective activation.

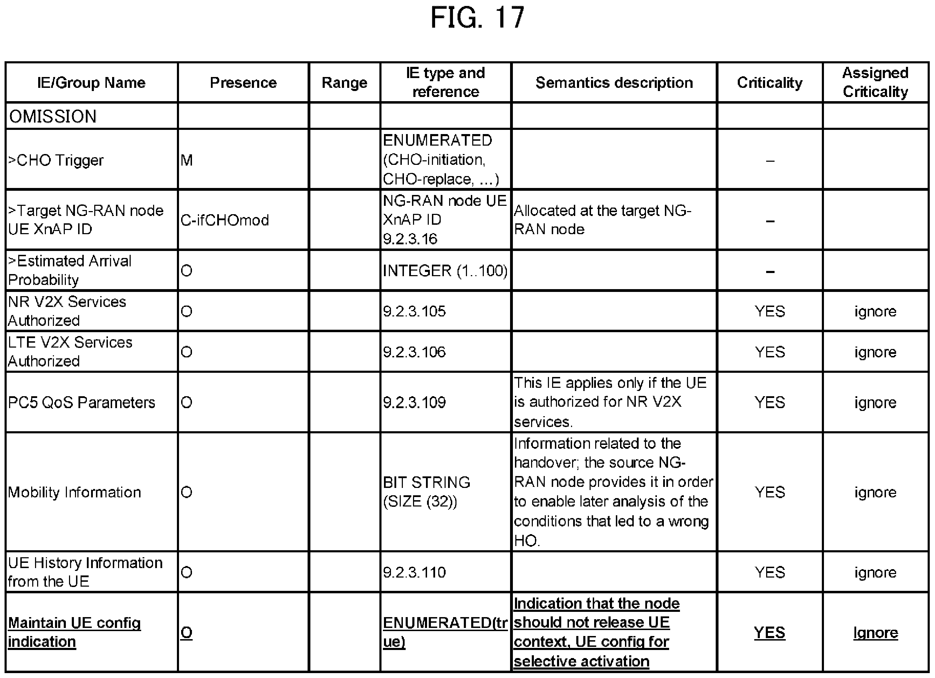

Fourth, an HO request used in step S63 of Operation Examples 7 and 8 will be described. As shown in Fig. 17, the HO request may include a Maintain UE config indication. The Maintain UE config indication is an information element for indicating the retention of configuration information such as a UE context, UE Config, and MCG Config, and may be considered to be an example of an information element for indicating Selective activation.

### (6) Operation and effect

In the embodiment, if the specific condition is satisfied, the UE 200 may perform Selective Activation for retaining configuration information (SpCell configuration) without releasing information after the end of the procedure for conditional reconfiguration. According to this kind of configuration, Selective Activation can be appropriately performed by defining the specific condition.

In the embodiment, when it is determined that Selective Activation is to be performed, even if the UE 200 is not connected to its own cell in conditional reconfiguration, the gNB 100 may retain configuration information (UE context and the like) without releasing information after the end of the procedure for conditional reconfiguration. With this kind of configuration, Selective Activation can be appropriately performed.

### (7) Other embodiments

Although the contents of the present invention have been described in accordance with the embodiment, the present invention is not limited to the descriptions, and it is obvious to those skilled in the art that various modifications and improvements are possible.

In the above disclosure, if the specific condition is satisfied, the UE 200 performs Selective Activation for retaining the SpCell configuration after the end of the procedure for conditional reconfiguration. The UE 200 may perform a connection to a target cell selected from target cell candidates included in the retained SpCell configuration (for example, RA procedure for selected target cell) in Selective Activation. The connection to the selected target cell may not require transmission of a Measurement Report to a network, and may not require a trigger from the network. More specifically, the UE 200 may perform the RA procedure for the selected target cell if an execution condition is satisfied. The execution condition is an example of configuration information received from the network and may be considered to be an example of an information element retained even after the end of the procedure for conditional reconfiguration in Selective Activation.

Although not specifically described in the above disclosure, the UE 200 may release configuration information if a release condition is satisfied in Selective Activation for retaining configuration information (SpCell configuration) without releasing information. The release condition may be a condition in which a fixed time elapses after the reception of an indication (for example, maintainCandidateCellConfig included in RRC Reconfiguration) from the network. The fixed time may be specified by the expiration of a timer that starts in response to the reception of the indication. The release condition may be a condition for receiving an explicit or implicit indication from the network.

Although not specifically described in the above disclosure, the gNB 100 may release configuration information if a release condition is satisfied in a case where configuration information (UE context and the like) is retained without being released. The release condition may be a condition in which a fixed time elapses after the reception of an indication (for example, Maintain UE config indication included in SN Addition request or HO request) from a source node. The fixed time may be specified by the expiration of a timer that starts in response to the reception of the indication. Assuming that the configuration information is released after the elapse of a fixed time, a fixed time used in a case where Selective Activation is applied may be longer than a fixed time used in a case where Selective Activation is not applied. The release condition may be a condition for receiving an explicit or implicit indication from the source node.

The release condition for the gNB 100 may be the following conditions. A T-SN candidate of CPC will be exemplified. However, a T-MN candidate of CHO may perform the same operation.

First, the T-SN candidate may release the UE config, if a condition (release condition) is satisfied which is for cancelling all target candidate PSCells at a timing of receiving a CPAC cancel indication from an MN in an SN modification request. The T-SN candidate may retain UE config until the T-SN receives a CPAC cancel indication.

Second, the T-SN candidate may transmit SN modification required to the MN if a load of the T-SN candidate is larger than a threshold, and may release UE config if the condition (release condition) for cancelling all target candidate PSCells is satisfied when CAPC cancellation is requested to the MN.

Third, when an SN addition/modification request is transmitted to the T-SN candidate, the MN may transmit TmaintainUEconfig to the T-SN candidate at the same time as a maintain UE config indication. The T_maintainUEconfig may include a timer value for defining a time during which UE Config should be retained. The T-SN candidate may start a timer when the maintain UE config indication (timer value) is received and release UE config when the condition (release condition) of timer expiration is satisfied. In such a case, the timer value may be set by the SN in SN-initiated CPC. The SN may transmit SN change required to the MN, and the MN may transmit the timer value set by the SN to the T-SN candidate, for example.

Fourth, the T-SN candidate may have T maintainUEconfig in advance. In other words, the T-SN candidate may determine the timer value. The T-SN candidate may start a timer when the maintain UE config indication is received, and may release UE config when the condition (release condition) of timer expiration is satisfied.

Fifth, when RRC Reconfiguration is transmitted to the UE 200, the MN may transmit TmaintainCPCconfig to the UE 200 at the same time as maintainCandidateCellConfig. The T_maintainCPCconfig may include a timer value for defining a time during which CPC Config should be retained. The UE 200 may start a timer when maintainCandidateCellConfig (timer value) is received and release CPC Config when the condition (release condition) of timer expiration is satisfied. In such a case, the timer value may be set by the SN in SN-initiated CPC. The SN may transmit SN change required to the MN, and the MN may transmit the timer value set by the SN to the UE 200, for example.

Sixth, the UE 200 may have T maintainCPCconfig in advance. In other words, the UE 200 may determine the timer value. The UE 200 may start a timer when maintainCandidateCellConfig is received and release CPC Config when the condition (release condition) of timer expiration is satisfied.

The release condition described above may include a condition where the mobility pattern of the UE 200 is a specific pattern for deactivating Selective Activation. In Operation Examples 1 and 5, if the mobility pattern of the UE 200 is the specific pattern, the MN may transmit an indication for cancelling Selective Activation to the UE 200 and T-SN candidate, for example. In Operation Example 3, if the mobility pattern of the UE 200 is the specific pattern, the S-SN may transmit the indication for cancelling Selective Activation to the MN, and the MN may transmit the indication for cancelling Selective Activation to the UE 200 and T-SN candidate. In Operation Example 7, if the mobility pattern of the UE 200 is the specific pattern, the S-MN may transmit the indication for cancelling Selective Activation to the UE 200 and T-MN candidate. In Operation Examples 2, 4, 6 and 8, if the mobility pattern of the UE 200 is the specific pattern, the UE 200 may transmit the indication for cancelling Selective Activation to the network. A node (UE 200, T-SN candidate, or T-MN candidate) that receives the indication for cancelling Selective Activation releases configuration information in response to the reception of the indication.

Although not specifically described in the above disclosure, a node may be read as a cell. The MN may be read as a cell included in the MCG (for example, PCell) and the SN may be read as a cell included in the SCG (for example, SCell, PSCell), for example.

Although not specifically described in the above disclosure, an operation performed by the UE 200 may be read as follows. The UE 200 retains all entries included in variables (VarConditionalReconfig) retained by the UE 200 when maintainCandidateCellConfig is configured, and deletes all entries included in variables (VarConditionalReconfig) retained by the UE 200 in a case other than the above case. The VarConditionalReconfig is a variable in which SpCell configuration is stored.

The block diagram (Figs. 4 and 5) used in the description of the above-described embodiment illustrates blocks in units of functions. Those functional blocks (components) can be realized by any combination of at least one of hardware and software. A realization method for each functional block is not particularly limited. That is, each functional block may be realized by using one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (component) that makes a transmitting function work may be called a transmitting unit or a transmitter. For any of the above, as described above, the realization method is not particularly limited.

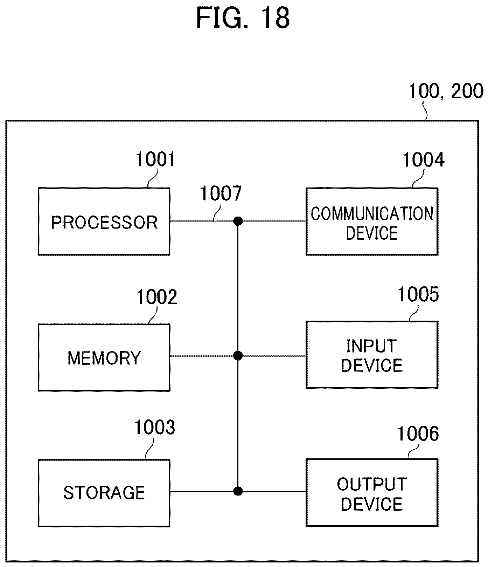

Further, the above-described gNB 100 and UE 200 (the device) may function as a computer that performs processing of a radio communication method of the present disclosure. Fig. 18 is a diagram illustrating an example of a hardware configuration of the device. As illustrated in Fig. 18, the device may be configured as a computer device including a processor 1001, a memory 1002, a storage 1003, a communication device 1004, an input device 1005, an output device 1006, a bus 1007, and the like.

Furthermore, in the following description, the term "device" can be read as meaning circuit, device, unit, or the like. The hardware configuration of the device may include one or more devices illustrated in the figure or may not include some of the devices.

Each of the functional blocks of the device (Fig. 4) is implemented by means of any of hardware elements of the computer device or a combination of the hardware elements.

Each function in the device is realized by loading predetermined software (programs) on hardware such as the processor 1001 and the memory 1002 so that the processor 1001 performs arithmetic operations to control communication via the communication device 1004 and to control at least one of reading and writing of data on the memory 1002 and the storage 1003.

The processor 1001 operates, for example, an operating system to control the entire computer. The processor 1001 may be configured with a central processing unit (CPU) including interfaces with peripheral devices, control devices, arithmetic devices, registers, and the like.

Moreover, the processor 1001 reads a program (program code), a software module, data, and the like from at least one of the storage 1003 and the communication device 1004 into the memory 1002, and executes various processes according to these. As the program, a program causing the computer to execute at least part of the operation described in the above embodiment is used. Alternatively, various processes described above may be executed by one processor 1001 or may be executed simultaneously or sequentially by two or more processors 1001. The processor 1001 may be implemented by using one or more chips. Alternatively, the program may be transmitted from a network via a telecommunication line.

The memory 1002 is a computer readable recording medium and may be configured, for example, with at least one of a Read Only Memory (ROM), Erasable Programmable ROM (EPROM), Electrically Erasable Programmable ROM (EEPROM), Random Access Memory (RAM), and the like. The memory 1002 may be referred to as a register, cache, main memory (main storage device), and the like. The memory 1002 may store therein programs (program codes), software modules, and the like that can execute the method according to one embodiment of the present disclosure.

The storage 1003 is a computer readable recording medium. Examples of the storage 1003 include at least one of an optical disk such as Compact Disc ROM (CD-ROM), a hard disk drive, a flexible disk, a magneto-optical disk (for example, a compact disk, a digital versatile disk, Blu-ray (registered trademark) disk), a smart card, a flash memory (for example, a card, a stick, a key drive), a floppy (registered trademark) disk, a magnetic strip, and the like. The storage 1003 may be referred to as an auxiliary storage device. The recording medium may be, for example, a database including at least one of the memory 1002 and the storage 1003, a server, or other appropriate medium.

The communication device 1004 is hardware (transmission/reception device) capable of performing communication between computers via at least one of a wired network and a wireless network. The communication device 1004 is also referred to as, for example, a network device, a network controller, a network card, a communication module, and the like.

The communication device 1004 may include a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may have an integrated configuration (for example, a touch screen).

Also, the respective devices such as the processor 1001 and the memory 1002 are connected to each other with the bus 1007 for communicating information. The bus 1007 may be constituted by a single bus or may be constituted by different buses for each device-to-device.

Further, the device may be configured to include hardware such as a microprocessor, a Digital Signal Processor (DSP), an Application Specific Integrated Circuit (ASIC), a Programmable Logic Device (PLD), and a Field Programmable Gate Array (FPGA). Some or all of these functional blocks may be realized by means of this hardware. For example, the processor 1001 may be implemented by using at least one of the above-described items of hardware.

Further, notification of information is not limited to that in the aspect/embodiment described in the present disclosure, and may be performed by using other methods. For example, notification of information may be performed by physical layer signaling (for example, Downlink Control Information (DCI), Uplink Control Information (UCI)), higher layer signaling (for example, RRC signaling, Medium Access Control (MAC) signaling, broadcast information (Master Information Block (MIB), System Information Block (SIB)), other signals, or a combination thereof. The RRC signaling may also be referred to as an RRC message, for example, or may be an RRC Connection Setup message, an RRC Connection Reconfiguration message, or the like.

Each aspect/embodiment described in the present disclosure may be applied to at least one of Long Term Evolution (LTE), LTE-Advanced (LTE-A), SUPER 3G, IMT-Advanced, the 4th generation mobile communication system (4G), the 5th generation mobile communication system (5G), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), a system using any other appropriate system, and a next-generation system that is expanded based on these. Further, a plurality of systems may be combined (for example, a combination of at least one of LTE and LTE-A with 5G) and applied.

The order of the processing procedures, sequences, flowcharts, and the like of each aspect/embodiment described in the present disclosure may be exchanged as long as there is no contradiction. For example, the methods described in the present disclosure present the elements of the various steps by using an exemplary order and are not limited to the presented specific order.

The specific operation that is performed by a base station in the present disclosure may be performed by its upper node in some cases. In a network constituted by one or more network nodes having a base station, it is obvious that the various operations performed for communication with the terminal may be performed by at least one of the base station and other network nodes other than the base station (for example, an MME, an S-GW, and the like may be considered, but there is not limited thereto). In the above, an example in which there is one network node other than the base station is explained; however, a combination of a plurality of other network nodes (for example, an MME and an S-GW) may be used.

Information and signals (information and the like) can be output from a higher layer (or lower layer) to a lower layer (or higher layer). These may be input and output via a plurality of network nodes.

The input/output information may be stored in a specific location (for example, a memory) or may be managed in a management table. The information to be input/output can be overwritten, updated, or added. The information may be deleted after outputting. The inputted information may be transmitted to another device.

The determination may be made by using a value (0 or 1) represented by one bit, by truth-value (Boolean: true or false), or by comparison of numerical values (for example, comparison with a predetermined value).

Each of the aspects/embodiment described in the present disclosure may be used separately or in combination, or may be switched in accordance with the execution. In addition, notification of predetermined information (for example, notification of "is X") is not limited to being performed explicitly, and it may be performed implicitly (for example, without notifying the predetermined information).

Regardless of being referred to as software, firmware, middleware, microcode, hardware description language, or some other name, software should be interpreted broadly to mean instructions, an instruction set, code, a code segment, program code, a program, a subprogram, a software module, an application, a software application, a software package, a routine, a subroutine, an object, an executable file, an execution thread, a procedure, a function, and the like.

Further, software, instruction, information, and the like may be transmitted and received via a transmission medium. For example, when software is transmitted from a website, a server, or another remote source by using at least one of a wired technology (a coaxial cable, an optical fiber cable, a twisted pair cable, a Digital Subscriber Line (DSL), or the like) and a wireless technology (infrared light, microwave, or the like), then at least one of these wired and wireless technologies is included within the definition of the transmission medium.

Information, signals, or the like described in the present disclosure may be represented by using any of a variety of different technologies. For example, data, an instruction, a command, information, a signal, a bit, a symbol, a chip, or the like that may be mentioned throughout the above description may be represented by a voltage, a current, an electromagnetic wave, a magnetic field or magnetic particles, an optical field or photons, or any combination thereof.

It should be noted that the terms described in the present disclosure and terms necessary for understanding the present disclosure may be replaced with terms having the same or similar meanings. For example, at least one of a channel and a symbol may be a signal (signaling). A signal may also be a message. Further, a Component Carrier (CC) may be referred to as a carrier frequency, a cell, a frequency carrier, or the like.

The terms "system" and "network" used in the present disclosure can be used interchangeably.

Furthermore, information, parameters, and the like described in the present disclosure may be represented by an absolute value, may be represented by a relative value from a predetermined value, or may be represented by corresponding other information. For example, a radio resource may be indicated using an index.

Names used for the above parameters are not restrictive names in any respect. In addition, formulas and the like using these parameters may be different from those explicitly disclosed in the present disclosure. Since the various channels (for example, a PUCCH, a PDCCH, or the like) and information elements can be identified by any suitable names, the various names allocated to these various channels and information elements shall not be restricted in any way.

In the present disclosure, the terms such as "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. A base station may also be referred to with a term such as a macro cell, a small cell, a femtocell, or a pico cell.

A base station can accommodate one or more (for example, three) cells (also referred to as sectors). In a configuration in which a base station accommodates a plurality of cells, the entire coverage area of the base station can be divided into a plurality of smaller areas. In each of the smaller areas, a communication service can be provided by a base station subsystem (for example, a small base station for indoor use (Remote Radio Head: RRH)).

The term "cell" or "sector" refers to a part or all of the coverage area of at least one of a base station and a base station subsystem that performs a communication service in this coverage.

In the present disclosure, the terms such as "mobile station (Mobile Station: MS)", "user terminal", "user equipment (User Equipment: UE)", and "terminal" can be used interchangeably.

A mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms by those skilled in the art.

At least one of a base station and a mobile station may be called a transmitting device, a receiving device, a communication device, or the like. Note that at least one of a base station and a mobile station may be a device mounted on a moving body, a moving body itself, or the like. The moving body may be a vehicle (for example, a car, an airplane, or the like), an unmanned moving body (a drone, a self-driving car, or the like), or a robot (manned type or unmanned type). At least one of a base station and a mobile station also includes a device that does not necessarily move during the communication operation. For example, at least one of a base station and a mobile station may be an Internet of Things (IoT) device such as a sensor.

Also, a base station in the present disclosure may be read as meaning a mobile station (user terminal, hereinafter, the same). For example, each aspect/embodiment of the present disclosure may be applied to a configuration in which communication between a base station and a mobile station is replaced with communication between a plurality of mobile stations (which may be called Device-to-Device (D2D), Vehicle-to-Everything (V2X), or the like). In this case, the mobile station may have the function of a base station. In addition, words such as "uplink" and "downlink" may also be read as meaning words corresponding to inter-terminal communication (for example, "side"). For example, an uplink channel, a downlink channel, or the like may be read as meaning a side channel.

Similarly, the mobile station in the present disclosure may be read as meaning a base station. In this case, the base station may have the function of the mobile station.

A radio frame may be composed of one or more frames in the time domain. Each of the one or more frames in the time domain may be referred to as a subframe.

A subframe may be further composed of one or more slots in the time domain. The subframe may be a fixed time length (for example, 1 ms) independent of the numerology.

The numerology may be a communication parameter applied to at least one of transmission and reception of a certain signal or channel. The numerology may indicate at least one of, for example, SubCarrier Spacing (SCS), bandwidth, symbol length, cyclic prefix length, Transmission Time Interval (TTI), the number of symbols per TTI, radio frame configuration, a specific filtering process performed by a transceiver in the frequency domain, a specific windowing process performed by a transceiver in the time domain, and the like.

A slot may be composed of one or more symbols (Orthogonal Frequency Division Multiplexing (OFDM)) symbols, Single Carrier Frequency Division Multiple Access (SC-FDMA) symbols, and the like) in the time domain. A slot may be a unit of time based on the numerology.

A slot may include a plurality of minislots. Each minislot may be composed of one or more symbols in the time domain. A minislot may be called a subslot. A minislot may be composed of fewer symbols than slots. A PDSCH (or PUSCH) transmitted in time units greater than the minislot may be referred to as a PDSCH (or PUSCH) mapping type A. A PDSCH (or PUSCH) transmitted using a minislot may be referred to as a PDSCH (or PUSCH) mapping type B.

Each of a radio frame, subframe, slot, minislot, and symbol represents a time unit for transmitting a signal. A radio frame, subframe, slot, minislot, and symbol may have respectively different names corresponding to them.

For example, one subframe may be called a transmission time interval (TTI), a plurality of consecutive subframes may be called a TTI, and one slot or one minislot may be called a TTI. That is, at least one of the subframe and TTI may be a subframe (1 ms) in the existing LTE, a period shorter than 1 ms (for example, 1 to 13 symbols), or a period longer than 1 ms. Note that, a unit representing TTI may be called a slot, a minislot, or the like instead of a subframe.

Here, a TTI refers to the minimum time unit of scheduling in radio communication, for example. For example, in the LTE system, the base station performs scheduling for allocating radio resources (frequency bandwidth, transmission power, and the like that can be used in each user terminal) to each user terminal in units of TTI. The definition of TTI is not limited to this.

A TTI may be a transmission time unit such as a channel-coded data packet (transport block), a code block, or a code word, or may be a processing unit such as scheduling or link adaptation. When a TTI is given, a time interval (for example, the number of symbols) in which a transport block, a code block, a code word, and the like are actually mapped may be shorter than TTI.

When one slot or one minislot is called a TTI, one or more TTIs (that is, one or more slots or one or more minislots) may be the minimum time unit of the scheduling. The number of slots (minislot number) constituting the minimum time unit of the scheduling may be controlled.

A TTI having a time length of 1 ms may be referred to as an ordinary TTI (TTI in LTE Rel. 8-12), a normal TTI, a long TTI, an ordinary subframe, a normal subframe, a long subframe, a slot, and the like. A TTI shorter than the ordinary TTI may be referred to as a shortened TTI, a short TTI, a partial TTI (partial or fractional TTI), a shortened subframe, a short subframe, a minislot, a subslot, a slot, and the like.

In addition, a long TTI (for example, ordinary TTI, subframe, and the like) may be read as meaning a TTI having a time length exceeding 1 ms, and a short TTI (for example, shortened TTI) may be read as meaning a TTI having a TTI length of less than a TTI length of a long TTI and a TTI length of 1 ms or more.

A resource block (RB) is a resource allocation unit in the time domain and the frequency domain, and may include one or more consecutive subcarriers in the frequency domain. The number of subcarriers included in the RB may be the same regardless of the numerology, and may be 12, for example. The number of subcarriers included in the RB may be determined based on the numerology.

Further, the time domain of an RB may include one or more symbols, and may have a length of 1 slot, 1 minislot, 1 subframe, or 1 TTI. Each TTI, subframe, or the like may be composed of one or more resource blocks.

Note that, one or more RBs may be called a Physical Resource Block (PRB), a Sub-Carrier Group (SCG), a Resource Element Group (REG), a PRB pair, a RB pair, and the like.

A resource block may be configured by one or more Resource Elements (REs). For example, one RE may be a radio resource domain of one subcarrier and one symbol.

A Bandwidth Part (BWP) (which may be called a partial bandwidth or the like) may represent a subset of consecutive common resource blocks (RBs) for a certain numerology in a certain carrier. Here, the common RB may be specified by an index of the RB based on the common reference point of the carrier. A PRB may be defined in a certain BWP and numbered within that BWP.

A BWP may include a BWP for UL (UL BWP) and a BWP for DL (DL BWP). One or more BWPs may be configured in one carrier for the UE.

At least one of the configured BWPs may be active, and the UE does not have to expect to transmit and receive predetermined signals/channels outside the active BWP. Note that "cell", "carrier", and the like in this disclosure may be read as meaning "BWP".

The above-described structures such as a radio frame, a subframe, a slot, a minislot, and a symbol are merely examples. For example, structures such as the number of subframes included in a radio frame, the number of slots per subframe or radio frame, the number of minislots included in a slot, the number of symbols and RBs included in a slot or minislot, the number of subcarriers included in RBs, and the number of symbols included in a TTI, a symbol length, the Cyclic Prefix (CP) length, and the like can be changed in various manner.

The terms "connected", "coupled", or any variations thereof mean any direct or indirect connection or coupling between two or more elements, and can include that one or more intermediate elements are present between two elements that are "connected" or "coupled" to each other. The coupling or connection between the elements may be physical, logical, or a combination thereof. For example, "connection" may be read as meaning "access". In the present disclosure, two elements can be "connected" or "coupled" to each other by using at least one of one or more wires, one or more cables, and one or more printed electrical connections, and as some non-limiting and non-exhaustive examples, by using electromagnetic energy having wavelengths in the radio frequency domain, a microwave region, and a light (both visible and invisible) region, and the like.

A Reference Signal may be abbreviated as RS and may be called a Pilot according to applicable standards.

As used in the present disclosure, the phrase "based on" does not mean "based only on" unless explicitly stated otherwise. In other words, the phrase "based on" means both "based only on" and "based at least on".

"Means" in the configuration of each device above may be replaced with "unit", "circuit", "device", and the like.

Any reference to elements using a designation such as "first", "second", or the like used in the present disclosure generally does not limit the amount or order of those elements. Such designations can be used in the present disclosure as a convenient method to distinguish between two or more elements. Thus, the reference to the first and second elements does not imply that only two elements can be adopted, or that the first element has to precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive-OR.

Throughout the present disclosure, for example, during translation, if articles such as a, an, and the in English are added, the present disclosure may include that a noun following these articles is used in plural.

As used in this disclosure, the term "determining" may encompass a wide variety of actions. "determining" includes deeming that determining has been performed by, for example, judging, calculating, computing, processing, deriving, investigating, searching (looking up, search, inquiry) (for example, searching in a table, database, or another data structure), ascertaining, and the like. In addition, "determining" can include deeming that determining has been performed by receiving (for example, receiving information), transmitting (for example, transmitting information), inputting (input), outputting (output), access (accessing) (for example, accessing data in a memory), and the like. In addition, "determining" can include deeming that determining has been performed by resolving, selecting, choosing, establishing, comparing, and the like. That is, "determining" may include deeming that "determining" regarding some action has been performed. Moreover, "determining" may be read as meaning "assuming", "expecting", "considering", and the like.

In the present disclosure, the wording "A and B are different" may mean "A and B are different from each other". It should be noted that the wording may mean "A and B are each different from C". Terms such as "separate", "couple", or the like may also be interpreted in the same manner as "different".

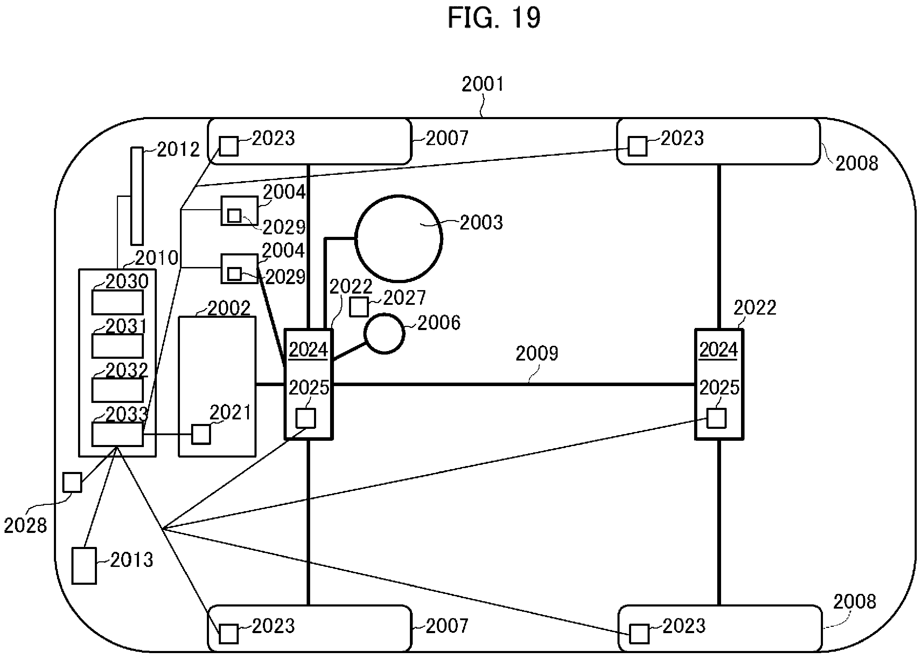

Fig. 19 shows a configuration example of a vehicle 2001. As shown in Fig 19, the vehicle 2001 includes a drive 2002, a steering 2003, an accelerator pedal 2004, a brake pedal 2005, a shift lever 2006, left and right front wheels 2007, left and right rear wheels 2008, an axle 2009, an electronic controller 2010, various sensors 2021 to 2029, an information service unit 2012, and a communication module 2013.

Examples of the drive 2002 include, an engine, a motor, and a hybrid of an engine and a motor.

The steering 2003 includes at least a steering wheel (also called a handle) and steers at least one of the front and rear wheels based on an operation of a steering wheel operated by a user.

The electronic controller 2010 includes a microprocessor 2031, a memory (ROM, RAM) 2032, and a communication port (IO port) 2033. The electronic controller 2010 receives signals from various sensors 2021 to 2027 provided in the vehicle. The electronic controller 2010 may be called an ECU (Electronic Control Unit).

The signals from the various sensors 2021 to 2028 include a current signal from a current sensor 2021 for sensing current of a motor, a rotation speed signal of a front wheel and a rear wheel acquired by the speed sensor 2022, a pressure signal of a front wheel and a rear wheel acquired by an air pressure sensor 2023, a speed signal of a vehicle acquired by a speed sensor 2024, an acceleration signal acquired by an acceleration sensor 2025, an accelerator pedal pressed-amount signal acquired by an accelerator pedal sensor 2029, a brake pedal pressed-amount signal acquired by a brake pedal sensor 2026, an operation signal of the shift lever acquired by a shift lever sensor 2027, and a detection signal acquired by an object detection sensor 2028 for detecting obstacles, vehicles, pedestrians, and the like.

The information service unit 2012 includes various devices such as a car navigation system, an audio system, a speaker, a television, and a radio for providing various information such as driving information, traffic information, and entertainment information, and one or more ECUs for controlling these devices. The information service unit 2012 provides various multimedia information and multimedia services to an occupant of the vehicle 1 by using information acquired from an external device through a communication module 2013 and the like.

A driver support system unit 2030 comprises various devices such as a millimeter wave radar, a Light Detection and Ranging (LiDAR), a camera, a positioning locator (for example, GNSS), map information (for example, high-definition (HD) maps, autonomous vehicle (AV) maps, and the like), a gyroscopic system (for example, an Inertial Measurement Unit (IMU), an Inertial Navigation System (INS), and the like), an Artificial Intelligence (AI) chip, and an AI processor for providing functions to prevent accidents or reduce a driving load of a driver, and one or more ECUs for controlling these devices. Further, the driver support system unit 2030 transmits and receives various kinds of information through the communication module 2013 to realize a driver support function or an automatic driving function.

The communication module 2013 can communicate with the microprocessor 2031 and components of the vehicle 1 through a communication port. For example, the communication module 2013 transmits and receives data through the communication port 2033 to and from the drive 2002, steering 2003, accelerator pedal 2004, brake pedal 2005, shift lever 2006, left and right front wheels 2007, left and right rear wheels 2008, axle 2009, microprocessor 2031 in the electronic control 2010, memory (ROM, RAM) 2032, and sensor 2021 to 2028.

The communication module 2013 is a communication device that can be controlled by the microprocessor 2031 of the electronic controller 2010 and can communicate with an external device. For example, The communication module 2013 transmits and receives various kinds of information via radio communication with the external device. The communication module 2013 may be placed inside or outside the electronic control unit 2010. Examples of the external device may include a base station, a mobile station, and the like.

The communication module 2013 transmits a current signal coming from a current sensor and input to the electronic controller 2010 to an external device via radio communication. Further, the communication module 2013 transmits a rotation speed signal of a front wheel and a rear wheel acquired by the speed sensor 2022, a pressure signal of a front wheel and a rear wheel acquired by an air pressure sensor 2023, a speed signal of a vehicle acquired by a speed sensor 2024, an acceleration signal acquired by an acceleration sensor 2025, an accelerator pedal pressed-amount signal acquired by an accelerator pedal sensor 2029, a brake pedal pressed-amount signal acquired by a brake pedal sensor 2026, an operation signal of the shift lever acquired by a shift lever sensor 2027, and a detection signal acquired by an object detection sensor 2028 for detecting obstacles, vehicles, pedestrians, and the like input to the electronic controller 2010 to an external device via radio communication.

The communication module 2013 receives various information (traffic information, signal information, inter-vehicle information, and the like.) transmitted from the external device and displays on the information service unit 2012 provided in the vehicle. Further, the communication module 2013 stores various information received from the external device in a memory 2032 usable by the microprocessor 2031. Based on the information stored in the memory 2032, the microprocessor 2031 may control the drive 2002, the steering 2003, the accelerator pedal 2004, the brake pedal 2005, the shift lever 2006, the left and right front wheels 2007, the left and right rear wheels 2008, the axle 2009, the sensors 2021 to 2028, and the like. provided in the vehicle 2001.

Although the present disclosure has been described in detail above, it will be obvious to those skilled in the art that the present disclosure is not limited to the embodiments described in the present disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### Reference Signs List

- 10: Radio communication system
- 20: NG-RAN
- 100: gNB
- 110: Reception unit
- 120: Transmission unit
- 130: Control unit
- 200: UE
- 210: Radio signal transmission and reception unit
- 220: Amplifier unit
- 230: Modulation and demodulation unit
- 240: Control signal and reference signal processing unit
- 250: Encoding/decoding unit
- 260: Data transmission and reception unit
- 270: Control unit
- 1001: Processor
- 1002: Memory
- 1003: Storage
- 1004: Communication device
- 1005: Input Device
- 1006: Output device
- 1007: Bus
- 2001: Vehicle
- 2002: Drive
- 2003: Steering
- 2004: Axel pedal
- 2005: Brake pedal
- 2006: Shift lever
- 2007: Left and right front wheels
- 2008: Left and right rear wheels
- 2009: Axle
- 2010: Electronic controller
- 2012: Information service unit
- 2013: Communication module
- 2021: Current sensor
- 2022: Speed sensor
- 2023: Air pressure sensor
- 2024: Vehicle speed sensor
- 2025: Acceleration sensor
- 2026: Brake pedal sensor
- 2027: Shift lever sensor
- 2028: Object detection sensor
- 2029: Axel pedal sensor
- 2030: Operation support system
- 2031: Microprocessor
- 2032: Memory (ROM, RAM)
- 2033: Communication port

## Claims

1. A terminal comprising:
a receiving unit that receives configuration information on conditional reconfiguration; and
a control unit that performs a procedure for the conditional reconfiguration, wherein
the control unit performs specific control for retaining the configuration information after an end of the procedure for the conditional reconfiguration when a specific condition is satisfied.

2. The terminal according to claim 1, wherein
the specific condition includes a condition for receiving an indication indicating the specific control from a network.

3. The terminal according to claim 1 or 2, wherein
the specific condition includes a condition for transmitting a message requesting the specific control to the network.

4. The terminal according to any one of claims 1 to 3, wherein
whether to perform the specific control is determined based on a mobility pattern of the terminal.

5. A base station comprising:
a transmitting unit that transmits configuration information on conditional reconfiguration; and
a control unit that performs a procedure for the conditional reconfiguration, wherein
the control unit assumes that a terminal performs specific control for retaining the configuration information after an end of the procedure for the conditional reconfiguration when a specific condition is satisfied.

6. A radio communication system including a terminal and a base station, wherein
the terminal comprises:
a receiving unit that receives configuration information on conditional reconfiguration; and
a control unit that performs a procedure for the conditional reconfiguration, wherein
the control unit performs specific control for retaining the configuration information after an end of the procedure for the conditional reconfiguration when a specific condition is satisfied.

7. A radio communication method comprising:
a step of receiving configuration information on conditional reconfiguration;
a step of performing a procedure for the conditional reconfiguration; and
a step of performing specific control for retaining the configuration information after an end of the procedure for the conditional reconfiguration when a specific condition is satisfied.
